# EUROPEAN PATENT SPECIFICATION

(11) **EP 3 777 630 B1**
(45) Date of publication and mention of the grant of the patent: **11.03.2026**
(21) Application number: 19784952.4
(22) Date of filing: 09.04.2019
(51) Int. Cl.: A47L 9/28, B25J 9/16, B25J 11/00, G06N 3/08, B25J 19/02

(54) **ROBOT CLEANER**
ROBOTERREINIGER
ROBOT NETTOYEUR

(30) Priority: 09.04.2018 KR 20180041222; 09.04.2018 KR 20180041221
(43) Date of publication of application: 17.02.2021
(73) Proprietor: LG Electronics Inc., Yeongdeungpo-gu Seoul 07336 (KR)
(72) Inventor: CHOI, Hyukdoo, Seoul 08592 (KR); HONG, Jihye, Seoul 08592 (KR)
(74) Representative: Ter Meer Steinmeister & Partner
(86) International application number: PCT/KR2019/004216
(87) International publication number: WO 2019/199027

(56) References cited:
- WO-A1-2016/095966
- JP-B2- 4 369 573
- KR-A- 20180 018 211
- KR-A- 20180 023 301
- KR-A- 20180 025 724
- KR-B1- 101 689 133
- US-A1- 2017 332 866

## Description

### (Technical Field]

Disclosed herein is a robot cleaner.

### [Background]

Robot cleaners are devices that can perform cleaning by suctioning dust and foreign substances from the floor while moving in a place to be cleaned without a user's manipulation.

A robot cleaner can determine a distance between the robot cleaner and an obstacle such as furniture, stationery and a wall in a cleaning area through a sensor, and can be controlled not to collide with an obstacle and to perform cleaning using the determined information.

Cleaning methods of the robot cleaner can be classified as a random one and a zigzag one based on a travel pattern. According to the random cleaning method, the robot cleaner can randomly choose a rotation and a linear movement only by determining whether an obstacle is placed using information sensed by a sensor. According to the zigzag cleaning method, the robot cleaner can determine whether an obstacle is placed using information sensed by a sensor and can determine a position of the robot cleaner to perform cleaning while moving in a specific pattern. US 2017/332866 A1 describes a robot cleaner comprising: a cleaner body including a wheel unit and a controller controlling driving of the wheel unit a suction unit disposed in the cleaner body, the suction unit sucking air containing dust and a sensing unit disposed at the front of the cleaner body in which the suction unit is disposed, wherein the sensing unit includes a first sensing part disposed respectively inclined with respect to side and top surfaces at an upper corner portion of the cleaner body to simultaneously photograph front and upper parts of the cleaner body. WO 2016/095966 A1 describes a method of operating a robotic cleaning device over a surface to be cleaned, the method being performed by the robotic cleaning device, the method comprising the steps of: following a boundary of a first object while registering path markers at intervals on the surface, the path markers comprising positional information; tracing previously registered path markers at an offset upon encountering one or more of the previously registered path markers; and switching from tracing the previously registered path markers to following an edge of a second object upon detection of the second object.

Herein, operation of a robot cleaner is described with reference to Korean Patent Application No. 10-2016-0122520A.

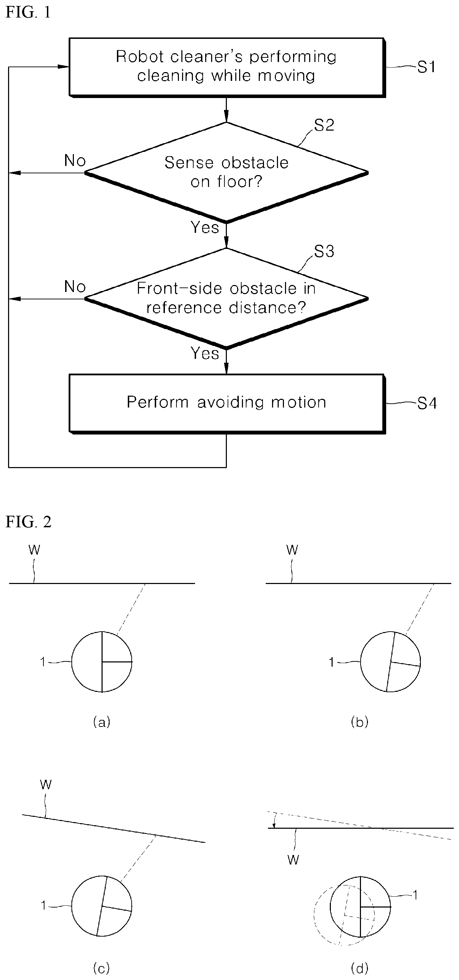

FIG. 1 is a flow chart showing an operation method of a robot cleaner of the related art.

Referring to FIG. 1, the robot cleaner of the related art performs cleaning while moving in a cleaning area (S1).

While performing cleaning, the robot cleaner determines whether an obstacle on the floor is recognized (S2), and when determining an obstacle on the floor is recognized, determines whether a front-side obstacle is placed within a reference distance (S3).

In this case, when the front-side obstacle is placed within the reference distance, the robot cleaner may avoid the obstacle on the floor to perform cleaning (S4).

When the obstacle on the floor is recognized and the front-side obstacle is placed within the reference distance, the robot cleaner of the related art, as described above, can avoid the obstacle on the floor and can avoid the front-side obstacle to perform cleaning.

The robot cleaner of the related art can avoid or climb the obstacle on the floor. However, the robot cleaner has to operate based on a distance between the robot cleaner and the front-side obstacle. In this case, the robot cleaner can temporarily stop operating. Accordingly, the robot cleaner cannot operate rapidly and accurately.

Further, a mobile robot and a method of recognizing a position thereof are described in Korean Patent No. 10-1697857 (registered on January 18, 2017).

FIG. 2 are views showing a process in which a mobile robot of the related art moves and a process in which a position of a mobile robot of the related art is corrected.

As illustrated in FIG. 2(a), the mobile robot 1 may move in parallel with a straight line of the wall.

Then, the mobile robot 1, as illustrated in FIG. 2(b), can be positioned incorrectly due to its slip on the floor. Accordingly, an expected direction of movement of the mobile robot 1 can be changed as a result of recognition of the straight line in FIG. 2(c), causing accumulation of recognition errors.

The mobile robot of the related art matches an extracted straight line and a previously extracted straight line, corrects an angle and recognizes a current position of the mobile robot. Accordingly, the position of the mobile robot may be corrected as in FIG. 2(d).

The mobile robot of the related art can recognize its position based on the matching between straight lines. Thus, accuracy of recognition of the position of the mobile robot at a corner or in an edge area may deteriorate. Further robot cleaner are known from US 2017/332866 A1 and WO 2016/095966 A1.

### [Disclosure]

### [Technical Problem]

The invention is set out in the appended set of claims. Preferred embodiments are covered by the dependent claims. The present disclosure is directed to a robot cleaner that may perform an unconditionally avoiding motion without recognizing an obstacle and may swiftly perform cleaning, when a height of an obstacle area is greater than a reference height.

The present disclosure is also directed to a robot cleaner that determines a motion as an avoiding motion or a climbing motion before approaching to a recognized obstacle based on the type of the obstacle and may perform cleaning swiftly and smoothly, when a height of an obstacle area is less than a reference height.

The present disclosure is also directed to a robot cleaner that may register an obstacle area on a cleaning map when a height of the obstacle area is less than a reference height and the type of an obstacle is not recognized, and after cleaning of a corresponding cleaning area is finished, may determine whether to clean the obstacle area, thereby making it possible to clean a surface of an obstacle in the cleaning area.

The present disclosure is also directed to a robot cleaner that may generate a combined landmark corresponding to a shape of a wall and a shape of an obstacle near the wall based on data about point groups for each first distance and each second distance, input from a sensor module, thereby making it possible to readily recognize and correct a position.

The present disclosure is also directed to a robot cleaner that may ensure improvement in accuracy of recognition of a position even at a corner or in an edge area using a combined landmark.

Aspects of the present disclosure are not limited to the above-described ones. Additionally, other aspects and advantages that have not been mentioned may be clearly understood from the following description and may be more clearly understood from embodiments. Further, it will be understood that the aspects and advantages of the present disclosure may be realized via means and combinations thereof that are described in the appended claims.

### [Technical Solution]

A robot cleaner according to an embodiment may avoid an obstacle area in an unconditionally avoiding motion without recognizing an obstacle in the obstacle area and may swiftly perform cleaning, when a height of the obstacle area, obtained using distance and depth sensors, is greater than a reference height. The robot cleaner may apply a deep learning-based convolution neural network (CNN) model to easily recognize the type of an obstacle, and may perform an avoiding motion or a climbing motion based on a predetermined motion of each obstacle, thereby making it possible to perform cleaning swiftly and smoothly and to ensure improvement in cleaning efficiency.

The robot cleaner may register an obstacle area in which the type of an obstacle is not recognized on a cleaning map, and when cleaning in a corresponding cleaning area is finished, may determine whether to clean the obstacle area based on a size of the obstacle area, thereby making it possible to clean a surface of an obstacle in the cleaning area.

A control module of a robot cleaner according to an embodiment may generate a first and a second landmark based on data about point groups for each first distance and each second distance input from a sensor module, may generate a combined landmark where the first landmark and the second landmark are combined, and may correct a specific position of a specific combined landmark matching the combined landmark among combined landmarks for each position to a current position on a cleaning map.

The control module of a robot cleaner may generate a new cleaning map where a combined landmark is connected to a previous combined landmark when a specific combined landmark matching the combined landmark is not registered.

### [Advantageous Effects]

The robot cleaner may perform an unconditionally avoiding motion without recognizing an obstacle and may swiftly perform cleaning, when a height of an obstacle area is greater than a reference height.

The robot cleaner determines a motion as an avoiding motion or a climbing motion before approaching to a recognized obstacle based on the type of the obstacle and may perform cleaning swiftly and smoothly, when a height of an obstacle area is less than a reference height.

The robot cleaner may register an obstacle area on a cleaning map when a height of the obstacle area is less than a reference height and the type of an obstacle is not recognized, and after cleaning of a corresponding cleaning area is finished, may determine whether to clean the obstacle area, thereby making it possible to clean a surface of the obstacle.

The robot cleaner may generate a combined landmark corresponding to a shape of a wall and a shape of an obstacle near the wall based on data about point groups for each first distance and each second distance, input from a sensor module, thereby making it possible to readily recognize and correct a position.

The robot cleaner may ensure improvement in accuracy of recognition of a position even at a corner or in an edge area using a combined landmark.

### [Description of Drawings]

FIG. 1 is a flow chart showing an operation method of a robot cleaner of the related art.
FIG. 2 are views showing a process in which a mobile robot of the related art moves and a process in which a position of a mobile robot of the related art is corrected.
FIG. 3 is a perspective view showing an example robot cleaner.
FIG. 4 is a control block diagram showing a configuration for control of an example robot cleaner.
FIG. 5 is a view showing an example in which an example robot cleaner performs cleaning along a travel path.
FIG. 6 is a view showing an example in which an example robot cleaner performs cleaning in an unconditionally avoiding motion.
FIG. 7 is a view showing an example in which an example robot cleaner performs cleaning in an avoiding motion.
FIG. 8 is a view showing an example in which an example robot cleaner performs cleaning in a climbing motion.
FIG. 9 is a view showing an example in which an example robot cleaner performs a registering and avoiding motion.
FIG. 10 is a flow chart showing an operation method of an example robot cleaner.
FIG. 11 is a control block diagram showing a configuration for control of an example robot cleaner.
FIG. 12 is a view showing operation of an example robot cleaner.
FIG. 13 is a view showing operation in an example robot cleaner.
FIG. 14 is a flow chart showing an operation method of an example robot cleaner.

### [Detailed Description]

Below, embodiments are described with reference to the accompanying drawings. Throughout the drawings, identical reference numerals denote identical or similar components.

An example robot cleaner is described hereunder.

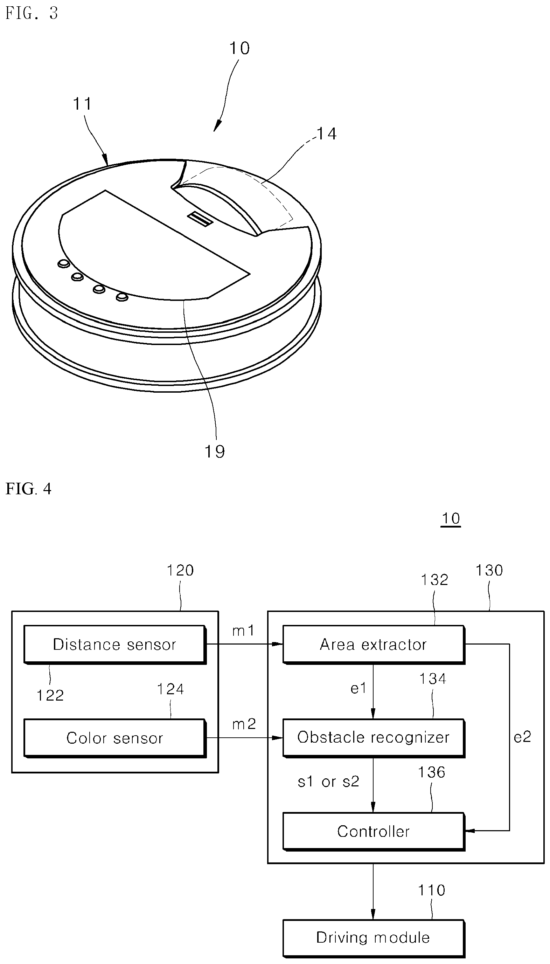

FIG. 3 is a perspective view showing an example robot cleaner.

Referring to FIG. 3, the robot cleaner 10 may include a main body 11, a dust collector 14, and a display 19.

The main body 11 may form an exterior of the robot cleaner 10.

The main body 11 may have a cylinder shape in which a height is less than a diameter, i.e., a flat cylinder shape.

The main body 11 may be provided therein with a suction device (not illustrated), a suction nozzle (not illustrated) and a dust collector 14 communicating with the suction nozzle (not illustrated).

The suction device may produce air-suction force, and when the dust collector 14 is disposed at a rear of the suction device, may be disposed to incline between a battery (not illustrated) and the dust collector 14.

The suction device may include a motor (not illustrated) electrically connected to the battery, and a fan (not illustrated) connected to a rotating shaft of the motor and forcing air to flow, but not be limited.

The suction nozzle may suction dust on the floor as a result of operation of the suction device.

The suction nozzle may be exposed downward from the main body 11 through an opening (not illustrated) formed on a bottom of the main body 11. Accordingly, the suction nozzle may contact the floor of an indoor space and may suction foreign substances on the floor as well as air.

The dust collector 14 may be provided with the suction nozzle at a lower side thereof to collect the foreign substance in the air suctioned by the suction nozzle.

Additionally, the main body 11 may be provided with a display 19 configured to display information at an upper portion thereof, but not limited.

The main body 11 may be provided on an outer circumferential surface thereof with a sensor (not illustrated) configured to sense a distance between the robot cleaner 10 and a wall of an indoor space or an obstacle, a bumper (not illustrated) configured to buffer an impact in collision, and drive wheels (not illustrated) for movement of the robot cleaner 10.

The drive wheels may be installed at a lower portion of the main body 11, and may be disposed respectively at lower portions of both sides of the main body 11, i.e., a left side and a right side of the main body 11.

Each of the drive wheels may be rotated by a motor (not illustrated).

In this case, the motor may be disposed respectively at the lower portions of both the sides of the main body 11 - the left side and the right side of the main body 11 - to correspond to the drive wheels, and the motors respectively disposed on the left side and the right side may operate independently.

Thus, the robot cleaner 10 may make a left turn or a right turn as well as a forward movement and a rearward movement. The robot cleaner may perform cleaning while changing a direction on its own based on driving of the motor.

The main body 11 may be provided with at least one auxiliary wheel (not illustrated) at the bottom thereof, and the auxiliary wheel may help minimize friction between the robot cleaner 10 and the floor and may guide movement of the robot cleaner 10.

Further, the main body 11 may be provided therein with a camera module (not illustrated) capable of capturing an image, a driving module (not illustrated) capable of driving the motor, and a control module (not illustrated) capable of controlling the camera module, the driving module, the suction device, the dust collector 14 and the display 19.

FIG. 4 is a control bock diagram showing a configuration for control of an example robot cleaner.

Referring to FIG. 4, the robot cleaner 10 may include a driving module 110, a camera module 120 and a control module 130.

The driving module 110 may move the main body 11 such that cleaning is performed based on control by the control module 130.

That is, the driving module 110 may operate the motor configured to rotate the drive wheels described with reference to FIG. 1, according to a control signal (sc) input from the control module 130.

The driving module 110 may operate the motor according to the control signal (sc) such that the main body 11 makes forward, rearward, leftward and rightward movements.

The camera module 120 may include a distance sensor 122 and a color sensor 124.

The distance sensor 122 may capture a first image (m1) having depth information corresponding to a front-side environment in a direction of movement of the main body 11.

The color sensor 124 may capture a second image (m2) having color information corresponding to the front-side environment.

The distance sensor 122 and the color sensor 124 may capture an image at the same angle but not be limited.

The first and second images (m1 and m2) may match each other.

The control module 130 may include an area extractor 132, an obstacle recognizer 134 and a controller 136.

When receiving the captured first image (m1) from the distance sensor 122, the area extractor 132 may extract a flat surface and a first obstacle area (n1) higher than the flat surface, based on depth information of the first image (m1).

In this case, when extracting the fist obstacle area (n1), the area extractor 132 may confirm whether a height of the first obstacle area (n1) is less than a predetermined reference height.

Then when the height of the first obstacle area (n1) is less than the reference height, the area extractor 132 may output a first area signal (e1) including the first obstacle area (n1) to the obstacle recognizer 134.

When the height of the first obstacle area (n1) is greater than the reference height, the area extractor 132 may output a second area signal (e2) including the first obstacle area (n1) to the controller 136.

When receiving the first area signal (e1) output from the area extractor 132, the obstacle recognizer 134 may extract the first obstacle area (n1) included in the first area signal (e1) and may extract a second obstacle area (n2) corresponding to the first obstacle area (n1) from the second image (m2) captured by the color sensor 114.

The obstacle recognizer 134 may recognize the type of an obstacle (n) by applying a predetermined deep learning-based convolution neural network (CNN) model to the second obstacle area (n2).

That is, the obstacle recognizer 134 may extract feature points of the obstacle (n) in the second obstacle area (n2) based on the deep learning-based CNN model, and may compare the feature points of the obstacle (n) with features point of a previous obstacle that is learned and stored, to recognize the type of the obstacle (n).

When recognizing the type of the obstacle (n), the obstacle recognizer 134 may output a first signal (s1) to the controller 136, and when not recognizing the type of the obstacle (n), may output a second signal (s2) to the controller 136.

When receiving the first signal (s1) from the obstacle recognizer 134, the controller 136 may determine a motion as an avoiding motion or a climbing motion based on the type of the obstacle (n), and may control the driving module 110 to continue cleaning in a first cleaning area which is currently being cleaned.

For example, when the obstacle (n) belongs to an object to be avoided such as a towel, crumpled paper and the like, the controller 136 may determine a motion as an avoiding motion to avoid the obstacle (n), and then may control the driving module 110 to continue cleaning in the first cleaning area.

When the obstacle (n) belongs to an object not to be avoided such as a door sill, a ruler or a thin book and the like, the controller 136 may determine a motion as a climbing motion to climb the obstacle (n), and then may control the driving module 110 to continue cleaning in the first cleaning area.

Additionally, when receiving the second signal (s2) from the obstacle recognizer 134, the controller 136 may perform a registering and avoiding motion.

To perform the registering and avoiding motion, the controller 136 may register an obstacle area (n3) corresponding to at least one of the first and second obstacle areas (n1 and n2) on a cleaning map including the first cleaning area, and may control the driving module 110 to avoid the obstacle area (n3) and to continue cleaning in the first cleaning area.

When finishing the cleaning in the first cleaning area after controlling the driving module 110 based on the registering and avoiding motion, the controller 136 may determine whether a size of the obstacle area (n3) registered on the cleaning map is greater than a predetermined reference size.

In this case, the controller 136 may calculate the size of the obstacle area (n3) by convolving an obstacle area previously registered on the cleaning map and an obstacle area later registered on the cleaning map, but not be limited.

Then when determining the size of the obstacle area (n3) is greater than the reference size, the controller 136 may climb the obstacle area (n3) and may clean a surface of the obstacle area (n3).

Additionally, when finishing the cleaning in the obstacle area (n3), the controller 136 may control the driving module 110 to clean a second cleaning area following the first cleaning area.

When determining the size of the obstacle area (n3) is less than the reference size, the controller 136 may control the driving module 110 to avoid the obstacle area (n3) and to clean the second cleaning area.

When receiving a second area signal (e2) output from the area extractor 136, the controller 136 may control the driving module 110 to perform an unconditionally avoiding motion for avoiding the first obstacle area (n1) and to continue cleaning in the first cleaning area.

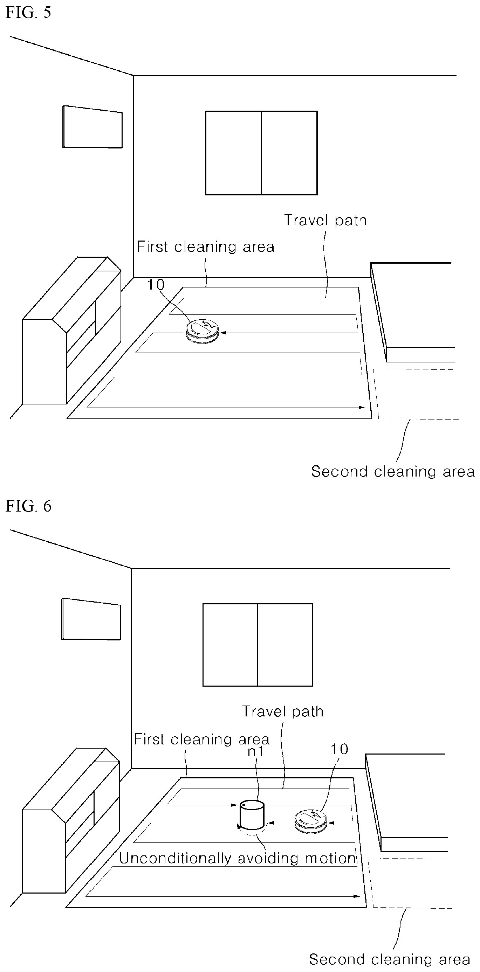

FIG. 5 is a view showing an example in which an example robot cleaner performs cleaning along a travel path.

Referring to FIG. 5, the robot cleaner 10 may clean a first cleaning area (a1) based on the cleaning map, and after the first cleaning area (a1) is cleaned, may clean a second cleaning area (a2).

In this case, FIG. 5 shows that the robot cleaner 10 performs cleaning while moving along a travel path set on the cleaning map when an obstacle (n) is not in the first cleaning area (a1).

FIG. 6 is a view showing an example in which an example robot cleaner performs cleaning in an unconditionally avoiding motion.

Referring to FIG. 6, the area extractor 132 of the control module 130 may extract a first obstacle area (n1) based on a first image (m1) captured by the camera module 120.

When a height of the first obstacle area (n1) is greater than a predetermined reference height, the area extractor 132 may output a second area signal (e2) to the controller 136.

In this case, when receiving the second area signal (e2), the controller 136 may control the driving module 110 to perform an unconditionally avoiding motion for avoiding the first obstacle area (n1) included in the second area signal (e2), to avoid the first obstacle area (n1) and to continue cleaning in the first cleaning area (a1).

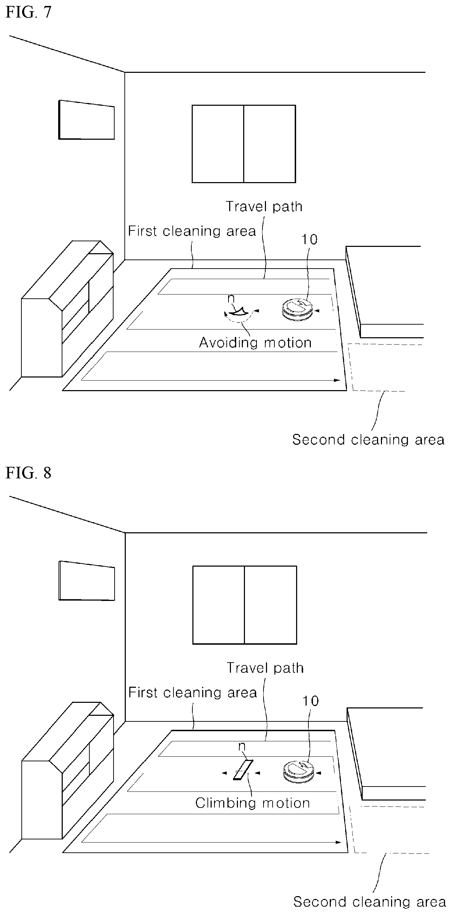

FIG. 7 is a view showing an example in which an example robot cleaner performs cleaning in an avoiding motion, and FIG. 8 is a view showing an example in which an example robot cleaner performs cleaning in a climbing motion.

Referring to FIG. 7, the area extractor 132 of the control module 130 may extract a first obstacle area (n1) based on a first image (m1) captured by the camera module 120.

Then when a height of the first obstacle area (n1) is less than a predetermined reference height, the area extractor 132 may output a first area signal (e1) to the obstacle recognizer 134.

When receiving the first area signal (e1), the obstacle recognizer 134 may recognize the type of an obstacle (n) by applying a deep learning-based CNN model to a second obstacle area (n2), corresponding to the first obstacle area (n1), in a second image (m2) captured by the camera module 120.

The CNN model may extract feature points of the obstacle (n) in the second obstacle area (n2), may compare the feature points of the obstacle (n) with feature points of a previous obstacle learned and stored, and may recognize the type of the obstacle (n).

Then when recognizing the type of the obstacle (n), the obstacle recognizer 134 may output a first signal (s1) to the controller 136.

In case the obstacle (n) belongs to an object to be avoided such as a thin book and the like when the controller 136 receives the first signal (s1), the controller 136 may perform an avoiding motion.

The controller 136 may control the driving module 110 to avoid the obstacle (n) and then to continue cleaning in the first cleaning area (a1).

FIG. 8 shows a situation after the obstacle recognizer 134 recognizes the type of the obstacle (n) and outputs the first signal (s1) to the controller 136 as described with reference to FIG. 7.

Referring to FIG. 8, in case the obstacle (n) belongs to an object not to be avoided such as a ruler, a door sill, a thin book and the like when the controller 136 receives the first signal (s1), the controller 136 may control the driving module 110 to climb the obstacle (n) and then to continue cleaning in the first cleaning area (a1).

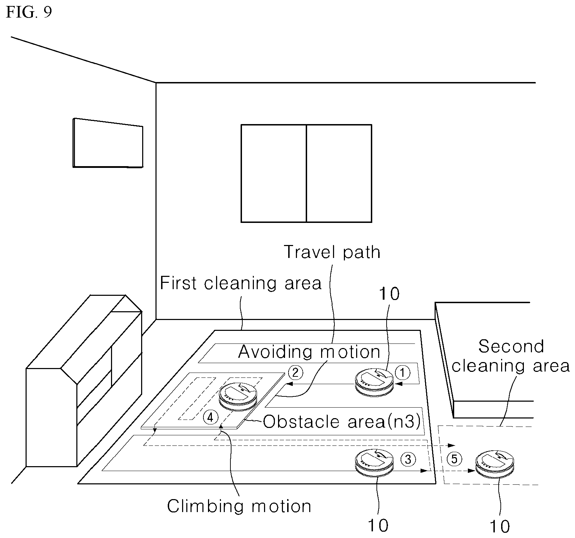

FIG. 9 is a view showing an example in which an example robot cleaner performs a registering and avoiding motion.

Referring to FIG. 9, the area extractor 132 of the control module 130 may extract a first obstacle area (n1) based on a first image (m1) captured by the camera module 120 at a first point ①.

Then when a height of the first obstacle area (n1) is less than a predetermined reference height, the area extractor 132 may output a first area signal (e1) to the obstacle recognizer 134.

When receiving the first area signal (e1), the obstacle recognizer 134 may recognize the type of an obstacle (n) by applying a deep learning-based CNN model to a second obstacle area (n2), corresponding to the first obstacle area (n1), in a second image (m2) captured by the camera module 120.

The CNN model may extract feature points of the obstacle (n) in the second obstacle area (n2), may compare the feature points of the obstacle (n) with feature points of a previous obstacle learned and stored, and may recognize the type of the obstacle (n).

Then when not recognizing the type of the obstacle (n) as a result of comparison between the feature points of the obstacle (n) and the feature points of the previous obstacle, the obstacle recognizer 134 may output a second signal (s2) to the controller 136.

When receiving the second signal (s2), the controller 136 may determine a motion as a registering and avoiding motion for registering an obstacle area (n3) on a cleaning map and for avoiding the obstacle area (n3).

The controller 136 may control the driving module 110 to perform an avoiding motion for avoiding the obstacle area (n3) and to finish cleaning in the first cleaning area (a1), at a second point ②.

When finishing the cleaning in the first cleaning area (a1), the controller 136 may calculate a size of the obstacle area (n3) at a third point ③.

The size of the obstacle area (n3) may be calculated by convolving an obstacle area registered previously on the cleaning map and an obstacle area registered later on the cleaning map, but not limited.

Then when the size of the obstacle area (n3) is greater than a predetermined reference size, the controller 136 may control the driving module 110 such that the robot cleaner 10 moves to a fourth point ④ in the obstacle area (n3), and then may control the driving module 110 to climb the obstacle area (n3) and to clean a surface of the obstacle area (n3).

Additionally, when the size of the obstacle area (n3) is less than the reference size at the third point ③, the controller 136 may control the driving module 110 such that the robot cleaner 10 moves to a fifth point ⑤ in a second cleaning area (a2) following the first cleaning area (a1) except the obstacle area (n3) and performs cleaning.

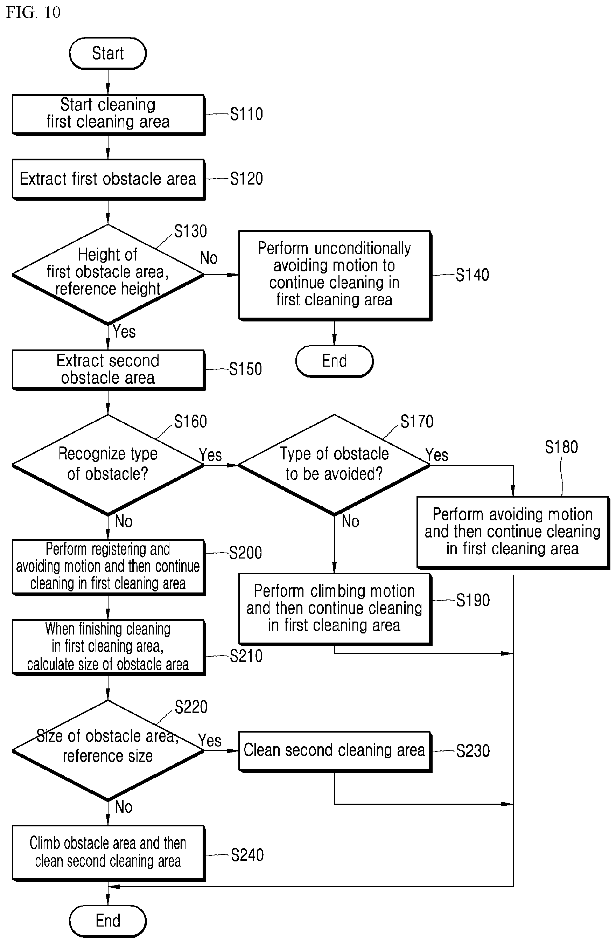

FIG. 10 is a flow chart showing an operation method of an example robot cleaner.

Referring to FIG. 10, the control module 130 of the robot cleaner 10 may control the driving module 110 to start cleaning in a first cleaning area (S110).

The control module 130 may extract a first obstacle area (n1) based on a first image (m1) input from the camera module 120 (S120), and may determine whether a height of the first obstacle area (n1) is less than a predetermined reference height (S130).

When the height of the first obstacle area (n1) is greater than the reference height, the control module 130 may control the driving module 110 to perform an unconditionally avoiding motion for unconditionally avoiding the first obstacle area (n1) and then to continue cleaning in the first cleaning area (S140).

When the height of the first obstacle area (n1) is less than the reference height after step 130, the control module 130 may extract a second obstacle area (n2) corresponding to the first obstacle area (n1) in a second image (m2) input from the camera module 12 (S150).

Then the control module 130 may determine whether the type of an obstacle (n) is recognized by applying a deep learning-based CNN model to the second obstacle area (n2) (S160).

When determining the type of the obstacle (n) is recognized, the control module 130 may determine the obstacle (n) belongs to an object to be avoided (S170), and when the obstacle (n) belongs to an object to be avoided, may control the driving module 110 to perform an avoiding motion and to continue cleaning in the first cleaning area (S180).

Additionally, when determining the obstacle (n) belongs to an object not to be avoided, the control module 130 may control the driving module 110 to perform a climbing motion and to continue cleaning in the first cleaning area (S190).

When determining the type of the obstacle (n) is not recognized after step 150, the control module 130 may control the driving module 110 to perform a registering and avoiding motion, to register an obstacle area (n3) on a cleaning map, to avoid the obstacle area (n3) and to continue cleaning in the first cleaning area (S200).

When finishing the cleaning in the first cleaning area, the control module 130 may calculate a size of the obstacle area (n3) (S210), and may determine whether the size of the obstacle area (n3) is greater than a predetermined reference size (S220).

When determining the size of the obstacle area (n3) is greater than the reference size, the control module 130 may control the driving module 110 to climb the obstacle area (n3), to clean a surface of the obstacle area (n3) and then to clean a second cleaning area following the first cleaning area (S230).

When determining the size of the obstacle area (n3) is less than the reference size after step 220, the control module 130 may control the driving module 110 to clean the second cleaning area (S240).

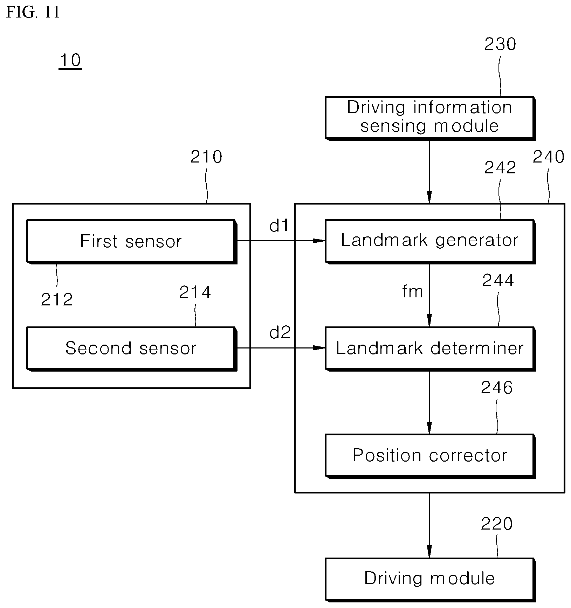

FIG. 11 is a control block diagram showing a configuration for control of an example robot cleaner.

Referring to FIG. 11, the robot cleaner 10 may include a sensor module 210, a driving module 220, a driving information sensing module 230 and a control module 240.

The sensor module 210 may be disposed in the main body 11 described with reference to FIG. 1, and may sense a wall or an obstacle through an outside of the main body 11.

In this case, the sensor module 210 may include a first and a second sensor 212, 214.

In one embodiment, the first and second sensors 212, 214 may include an infrared sensor or an ultrasonic sensor, a position sensitive device (PSD) sensor and the like, but not be limited.

The first and second sensors 212, 214 may measure a distance from the robot cleaner 10 to a wall and to an obstacle at different sensing angles.

The first sensor 212 may output data (d1) about a point group for each first distance, measured in real time, to the control module 240.

The second sensor 214 may output data (d2) about a point group for each second distance, measured in real time, to the control module 240.

Data (d1 and d2) about the point groups for each first distance and each second distance may be data produced as a result of sensing of the wall or the obstacle by each of the first and the second sensors 212, 214, and may be data in which reflected signals of signals sent at predetermined time intervals are expressed as a single point.

The driving module 220 may drive the drive wheels and motor described with reference to FIG. 1 and may autonomously move to move the main body 11.

The driving information sensing module 230 may include an acceleration sensor (not illustrated).

The acceleration sensor may sense a change in speeds during travel of the robot cleaner 10, e.g., a change in speeds of movement of the robot cleaner 10, caused by a departure, a halt, a change in directions, a collide with an object and the like, and may output results of the sensing to the control module 240.

The control module 240 may include a landmark generator 242, a landmark determiner 244 and a position corrector 246.

The landmark generator 242 may apply a clustering algorithm to data (a1) about the point groups for each first distance input from the first sensor 212 at predetermined time intervals to generate a first clustered group.

Then the landmark generator 242 may compare a deviation in first gradients between adjacent points from a first start point to a first end point in the first clustered group with a predetermined critical value to generate a first landmark.

The landmark generator 242 may generate the first landmark expressed as a straight line when the deviation in first gradients is less than the critical value and remains constant, or may generate the first landmark expressed as a curve when the deviation in first gradients is the critical value or greater.

The landmark generator 242 may apply a clustering algorithm to data (a2) about the point groups for each second distance input from the second sensor 214 at predetermined time intervals to generate a second clustered group.

The landmark generator 242 may compare a deviation in second gradients between adjacent points from a second start point to a second end point in the second clustered group with the critical value to generate a second landmark.

The landmark generator 242 may generate the second landmark expressed as a straight line when the deviation in second gradients is less than the critical value and remains constant, or may generate the second landmark expressed as a curve when the deviation in second gradients is the critical value or greater.

Then the landmark generator 242 may combine the first and second landmarks to generate a combined landmark (fm).

In one embodiment, the landmark generator 242 may receive data (d1 and d2) about point groups for each first distance and for each second distance, which differ from each other, from the two sensors, i.e., the first and second sensors 212, 214, may generate first and second landmarks and then may generate a combined landmark. However, the landmark generator 242 may generate a single landmark based on data about a points group for each distance input from a single sensor, but not be limited.

When the first and second landmarks are expressed as straight lines and a contained angle between the first and the second landmarks is included in a range of predetermined critical values, the landmark generator 242 may generate a "" 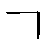 "-shaped combined landmark.

When the first and second landmarks are expressed as straight lines and a contained angle between the first and second landmarks is not included in the range of critical values, the landmark generator 242 may not generate a combined landmark as the first and second landmarks are not related, or may combine a first previous landmark and a second previous landmark generated previously to generate a combined landmark.

The landmark generator 242 may generate a combined landmark where a straight line and a curve are combined when the first landmark is expressed as a curve and the second landmark is expressed as a straight line.

The landmark determiner 244 may determine whether the combined landmark generated by the landmark generator 242 is registered.

That is, the landmark determiner 244 may determine whether a specific combined landmark matching the combined landmark is registered among registered combined landmarks for each position, and may output results of the determination to the position corrector 246.

When determining that the specific combined landmark is registered as a result of determination of the landmark determiner 244, the position corrector 246 may correct a current position on the cleaning map to a specific position based on the specific combined landmark.

Additionally, when determining that the specific combined landmark is not registered as a result of determination of the landmark determiner 244, the position corrector 246 may store and register the combined landmark and may generate a new cleaning map where the combined landmark is connected to a previous combined landmark.

When a combined landmark generated based on data about point groups for each distance sensed by the sensor module 210 matches the registered specific combined landmark, the robot cleaner 10 according to one embodiment may correct a current position to a specific position based on the specific combined landmark, thereby making it possible to ensure improvement in correction of a position.

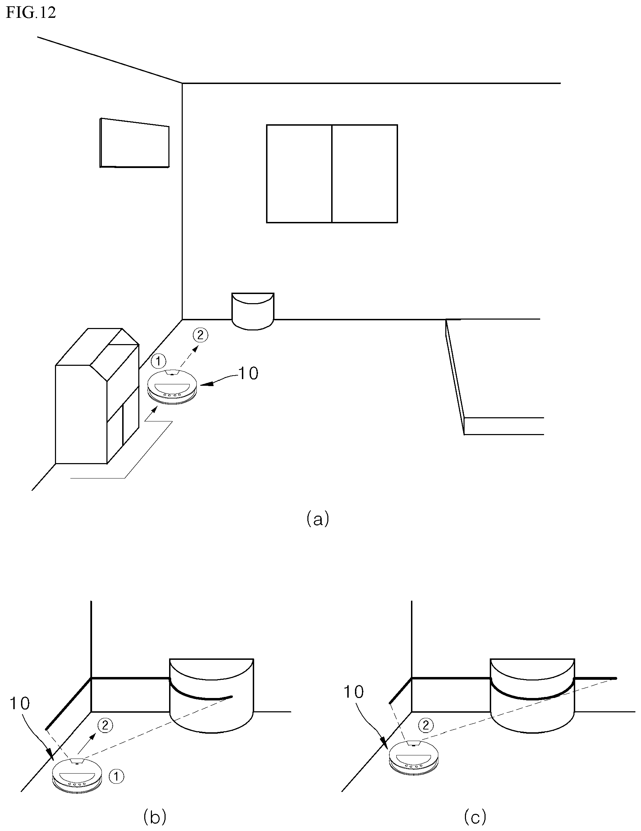

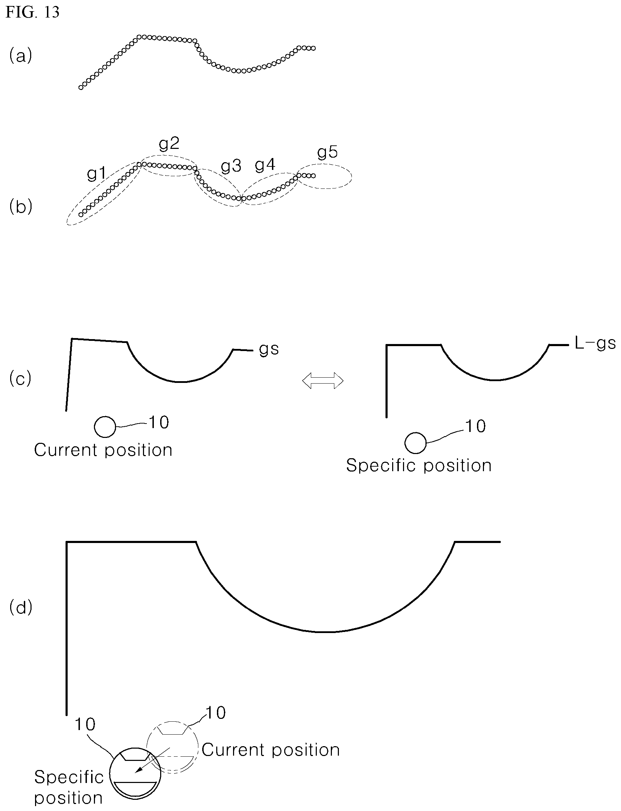

FIG. 12 is a view showing operation of an example robot cleaner, and FIG. 13 is a view showing operation in an example robot cleaner.

FIG. 12(a) shows that a robot cleaner 10 performs cleaning while autonomously moving in an indoor space.

The robot cleaner 10 may move along a wall but not be limited.

That is, the robot cleaner 10 may perform cleaning while moving from a point ① to a point ②, and may sense the wall to correct a current position on a predetermined cleaning map.

FIG. 12(b) and FIG. 12(c) show an enlarged one block in FIG. 12(a).

FIG. 12(b) shows a range in which a sensor module 210 senses the wall when the robot cleaner 10 moves from the point ① to the point ②.

FIG. 12(c) shows a range in which the sensor module 210 senses the wall when the robot cleaner 10 is positioned at the point ②.

Referring to FIG. 13(a), the sensor module 210 of the robot cleaner 10 may output data about a point group for each distance between the robot cleaner 10 and the wall to the control module 240 at predetermined time intervals when the robot cleaner 10 moves from the point ① to the point ②.

In this case, the data about a point group for each distance may partially overlap based on the number of sensors included in the sensor module 210, or may be mixed with different data about a point group for each distance, but not be limited.

Referring to FIG. 13(b), the landmark generator 242 included in the control module 240 may apply a clustering algorithm to the data about a point group for each distance to generate first to fifth clustered groups (g1 to g5).

In one embodiment, the landmark generator 242 may generate five clustered groups, i.e., the first to fifth clustered groups (g1 to g5). The landmark generator 242 may also generate a single clustered group, but not be limited.

Referring to FIG. 13(c), the landmark generator 242 may generate first to fifth landmarks respectively corresponding to the first to fifth clustered groups (g1 to g5), and may combine the first to fifth landmarks to generate a combined landmark (gs).

A process in which the combined landmark (gs) is generated in one embodiment is described with reference to FIG. 11.

The landmark generator 242 may show a current position of the robot cleaner 10 in a flat surface (2D) shape.

Then the landmark determiner 244 may determine whether a specific combined landmark (L-gs) matching the combined landmark (gs) is registered among combined landmarks for each position.

FIG. 13(c) shows that a specific combined landmark (L-gs) matching the combined landmark (gs) is registered.

Referring to FIG. 13(d), the position corrector 246 included in the control module 240 may correct a current position to a specific position of the specific combined landmark (L-gs) when the specific combined landmark (L-gs) matching the combined landmark (gs) is registered.

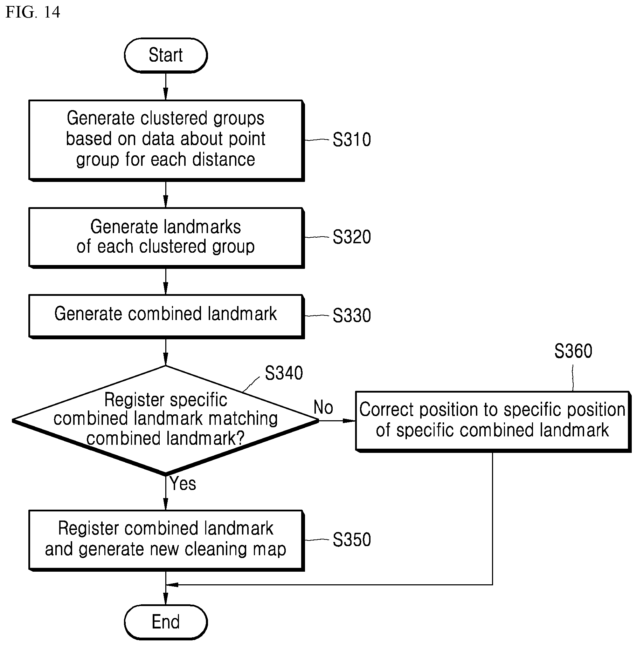

FIG. 14 is a flow chart showing an operation method of an example robot cleaner.

Referring to FIG. 14, the control module 240 of the robot cleaner 10 may apply a clustering algorithm to data about a point group for each distance, input from the sensor module 210, to generate clustered groups (S310).

The control module 240 may generate landmarks of each clustered group (S320).

The control module 240 may generate a combined landmark in which landmarks are combined (S330).

The control module 240 may determine whether a specific combined landmark matching the combined landmark is registered among combined landmarks for each position (S340).

When determining the specific combined landmark is registered, the control module 240 may correct a current position on the cleaning map to a specific position based on the specific combined landmark (S350).

When determining the specific combined landmark is not registered, the control module 240 may register the combined landmark and may generate a new cleaning map where the combined landmark is connected to a previous combined landmark (S360).

The embodiments have been described with reference to a number of illustrative embodiments thereof. However the present disclosure is not intended to limit the embodiments and the accompanying drawings, and the embodiments can be replaced, modified and changed by those skilled in the art that will fall within the scope of the principles of this disclosure.

## Claims

1. A robot cleaner (10), comprising:
a driving module (110) configured to move a main body (11) of the robot cleaner (10) in a first cleaning area;
a camera module (120) configured to output a first image and a second image of a front-side environment, captured when the main body (11) moves; and
a control module (130; 240) configured to, when a type of an obstacle (n) at the front-side environment based on the first image and the second image is recognized, control the driving module (110) to perform an avoiding motion or a climbing motion based on the type of an obstacle in the front-side environment and to move the main body (11),
**characterized by** the control module (130) comprising:
an area extractor (132) configured to extract a first obstacle area from the first image;
an obstacle recognizer (134) configured to recognize the type of the obstacle (n) by applying a deep learning-based convolutional neural network (CNN) model to a second obstacle area in the second image corresponding to the first obstacle area; and
a controller (136) configured to determine a motion as the avoiding motion or the climbing motion based on the type of the obstacle and to control the driving module (110).

2. The robot cleaner (10) of claim 1, the camera module (120), comprising:
a distance sensor (122) configured to capture the first image having depth information corresponding to the front-side environment; and
a color sensor (124) configured to capture the second image having color information corresponding to the front-side environment.

3. The robot cleaner (10) of claim 1, wherein the area extractor (132) is configured to extract a flat surface and a first obstacle area higher than the flat surface based on depth information of the first image, and when a height of the first obstacle area is less than a predetermined reference height, output a first area signal including the first obstacle area to the obstacle recognizer (134).

4. The robot cleaner (10) of claim 3, wherein the obstacle recognizer (134) is configured to, when receiving the first area signal, extract feature points of the obstacle by applying the CNN model to the second obstacle area, and when the feature points of the obstacle match any one of the feature points of a previous obstacle learned and stored, recognize the previous obstacle as the type of the obstacle and outputs a first signal to the controller.

5. The robot cleaner (10) of claim 4, wherein the obstacle recognizer (134), when the feature points of the obstacle do not match any one of the feature points of the previous obstacle learned and stored, does not recognize the type of the obstacle and outputs a second signal to the controller.

6. The robot cleaner (10) of claim 1, wherein the controller (136) is configured to:
when a first signal indicating the type of the obstacle is recognized, is input from the obstacle recognizer (134), and the obstacle belongs to an object to be avoided, determine a motion as the avoiding motion, or
when the first signal indicating the type of the obstacle is recognized, is input from the obstacle recognizer (134), and the obstacle belongs to an object not to be avoided, determine a motion as the climbing motion, and
control the driving module (110) to continue cleaning in the first cleaning area.

7. The robot cleaner (10) of claim 1, wherein the controller (136) is configured to:
when a second signal indicating the type of the obstacle is not recognized, is input from the obstacle recognizer (134), determine a motion as a registering and avoiding motion for registering an obstacle area corresponding to at least one of the first and second obstacle areas on a cleaning map including the first cleaning area and then avoiding the obstacle area,
control the driving module (110) based on the registering and avoiding motion, and
continue cleaning in the first cleaning area.

8. The robot cleaner (10) of claim 7, wherein the controller (136) is configured to:
when finishing cleaning in the first cleaning area after controlling the driving module in the registering and avoiding motion, determine whether a size of the obstacle area registered on the cleaning map is greater than a predetermined reference size.

9. The robot cleaner (10) of claim 8, wherein the controller (136) is configured to:
when the size of the obstacle area is greater than the reference size, control the driving module (110) to climb the obstacle and to clean a surface of the obstacle and/or, wherein the controller (136) is configured to:
when the size of the obstacle area is less than the reference size, control the driving module (110) to clean a second cleaning area following the first cleaning area.

10. The robot cleaner (10) of claim 3, wherein the area extractor (132) is configured to:
when a height of the first obstacle area is greater than the reference height, output a second area signal including the first obstacle area to the controller (136).

11. The robot cleaner (10) of claim 10, wherein the controller (136) is configured to:
when receiving the second area signal, determine a motion as an unconditionally avoiding motion for avoiding the first obstacle area, and
control the driving module (110) to avoid the first obstacle area based on the unconditionally avoiding motion and then to continue cleaning in the first cleaning area.

12. The robot cleaner (10) of any one of the preceding claims, further comprising:
a sensor module (210), and wherein the control module (240) is further configured to:
correct a current position on a cleaning map to a specific position based on a specific combined landmark when a combined landmark generated based on data about point groups for each first distance and each second distance input from the sensor module (210) for a predetermined period matches the specific combined landmark among combined landmarks for each position stored.

13. The robot cleaner (10) of claim 12, wherein the sensor module (210) comprising:
a first sensor (212) configured to output data about point groups for each first distance; and
a second sensor (214) having a sensing angle different from the first sensor (212) and configured to output data about point groups for each second distance and/or wherein the control module (220) comprising:
a landmark generator (242) configured to generate the combined landmark based on a first and a second clustered group generated by applying a clustering algorithm to the data about point groups for each first distance and each second distance;
a landmark determiner (244) configured to determine whether the specific combined landmark matching the combined landmark is registered among the combined landmarks for each position; and
a position corrector (246) configured to correct the current position to the specific position when the landmark determiner (244) determines that the specific combined landmark is registered.

14. The robot cleaner (10) of claim 13, wherein the landmark generator (242) compares a deviation in first gradients of adjacent points from a first start point to a first end point in the first clustered group with a predetermined critical value to generate a first landmark, compares a deviation in second gradients of adjacent points from a second start point to a second end point in the second clustered group with the critical value to generate a second landmark, and combines the first landmark and the second landmark to generate the combined landmark; and/or
wherein, when each deviation in first gradients and second gradients is constantly less than the critical value, the landmark generator (242) generates the first and second landmarks expressed as a straight line, or when the deviation in first gradients and second gradients is greater than the critical value, generates the first and second landmarks expressed as a curve; and/or
wherein, when the specific combined landmark is not registered, the position corrector (246) stores and registers the combined landmark, and generates a new cleaning map in which the combined landmark is connected to a previous combined landmark.

## Patentansprüche

1. Reinigungsroboter (10), der Folgendes umfasst:
ein Antriebsmodul (110), das konfiguriert ist, einen Hauptkörper (11) des Reinigungsroboters (10) in einem ersten Reinigungsbereich zu bewegen;
ein Kameramodul (120), das konfiguriert ist, ein erstes Bild und ein zweites Bild von einer Vorderseitenumgebung auszugeben, die aufgenommen werden, wenn sich der Hauptkörper (11) bewegt; und
ein Steuermodul (130; 140), das konfiguriert ist, dann, wenn basierend auf dem ersten Bild und dem zweiten Bild ein Typ eines Hindernisses (n) in der Vorderseitenumgebung erkannt worden ist, das Antriebsmodul (110) zu steuern, basierend auf dem Typ eines Hindernisses in der Vorderseitenumgebung eine Ausweichbewegung oder eine Kletterbewegung durchzuführen und den Hauptkörper (11) zu bewegen,
**dadurch gekennzeichnet, dass** das Steuerungsmodul (130) Folgendes umfasst:
einen Bereichsextraktor (132), der konfiguriert ist, aus dem ersten Bild einen ersten Hindernisbereich zu extrahieren;
eine Hinderniserkennungsvorrichtung (134), die konfiguriert ist, den Typ des Hindernisses (n) durch das Anwenden eines auf Deep Learning basierenden Modells eines neuronalen Faltungsnetzes (CNN-Modell) auf einen zweiten Hindernisbereich in dem zweiten Bild, der dem ersten Hindernisbereich entspricht, zu erkennen; und
eine Steuereinrichtung (136), die konfiguriert ist, basierend auf dem Typ des Hindernisses eine Bewegung als die Ausweichbewegung oder die Kletterbewegung zu bestimmen und das Antriebsmodul (110) zu steuern.

2. Reinigungsroboter (10) nach Anspruch 1, wobei das Kameramodul (120) Folgendes umfasst:
einen Entfernungssensor (122), der konfiguriert ist, das erste Bild zu erfassen, das Tiefeninformationen aufweist, die der Vorderseitenumgebung entsprechen; und
einen Farbsensor (124), der konfiguriert ist, das zweite Bild zu erfassen, das Farbinformationen aufweist, die der Vorderseitenumgebung entsprechen.

3. Reinigungsroboter (10) nach Anspruch 1, wobei der Bereichsextraktor (132) konfiguriert ist, basierend auf Tiefeninformationen des ersten Bildes eine flache Oberfläche und einen ersten Hindernisbereich, der höher ist als die flache Oberfläche, zu extrahieren, und dann, wenn eine Höhe des ersten Hindernisbereichs kleiner ist als eine vorgegebene Referenzhöhe, ein erstes Bereichssignal, das den ersten Hindernisbereich enthält, an die Hinderniserkennungsvorrichtung (134) auszugeben.

4. Reinigungsroboter (10) nach Anspruch 3, wobei die Hinderniserkennungsvorrichtung (134) konfiguriert ist, dann, wenn sie das erste Bereichssignal empfängt, Merkmalspunkte des Hindernisses durch Anwenden des CNN-Modells auf den zweiten Hindernisbereich zu extrahieren, und dann, wenn die Merkmalspunkte des Hindernisses mit einem der Merkmalspunkte eines vorherigen gelernten und gespeicherten Hindernisses übereinstimmen, das vorherige Hindernis als den Typ des Hindernisses zu erkennen und ein erstes Signal an die Steuereinrichtung auszugeben.

5. Reinigungsroboter (10) nach Anspruch 4, wobei die Hinderniserkennungsvorrichtung (134) dann, wenn die Merkmalspunkte des Hindernisses nicht mit einem der Merkmalspunkte des vorherigen gelernten und gespeicherten Hindernisses übereinstimmen, den Typ des Hindernisses nicht erkennt und ein zweites Signal an die Steuereinrichtung ausgibt.

6. Reinigungsroboter (10) nach Anspruch 1, wobei die Steuereinrichtung (136) konfiguriert ist:
dann, wenn ein erstes Signal, das anzeigt, dass der Typ des Hindernisses erkannt worden ist, von der Hinderniserkennungsvorrichtung (134) eingegeben wird, und das Hindernis zu einem auszuweichenden Objekt gehört, eine Bewegung als die Ausweichbewegung zu bestimmen, oder
dann, wenn das erste Signal, das anzeigt, dass der Typ des Hindernisses erkannt worden ist, von der Hinderniserkennungsvorrichtung (134) eingegeben wird, und das Hindernis zu einem Objekt gehört, dem nicht ausgewichen werden muss, eine Bewegung als die Kletterbewegung zu bestimmen, und
das Antriebsmodul (110) zu steuern, das Reinigen in dem ersten Bereich fortzusetzen.

7. Reinigungsroboter (10) nach Anspruch 1, wobei die Steuereinrichtung (136) konfiguriert ist:
dann, wenn ein zweites Signal, das anzeigt, dass der Typ des Hindernisses nicht erkannt worden ist, von der Hinderniserkennungsvorrichtung (134) eingegeben wird, eine Bewegung als eine Registrierungs- und Ausweichbewegung zum Registrieren eines Hindernisbereichs, der dem ersten und/oder zweiten Hindernisbereich entspricht, auf einer Reinigungskarte, die den ersten Reinigungsbereich enthält, zu bestimmen und anschließend dem Hindernisbereich auszuweichen,
das Antriebsmodul (110) basierend auf der Registrierungs- und Ausweichbewegung zu steuern, und
das Reinigen in dem ersten Reinigungsbereich fortzusetzen.

8. Reinigungsroboter (10) nach Anspruch 7, wobei die Steuereinrichtung (136) konfiguriert ist:
dann, wenn das Reinigen in dem ersten Reinigungsbereich nach dem Steuern des Antriebsmoduls in der Registrierungs- und Ausweichbewegung beendet worden ist, zu bestimmen, ob eine Größe des Hindernisbereichs, der auf der Reinigungskarte registriert worden ist, größer ist als eine vorgegebene Referenzgröße.

9. Reinigungsroboter (10) nach Anspruch 8, wobei die Steuereinrichtung (136) konfiguriert ist:
dann, wenn die Größe des Hindernisbereichs größer ist als die Referenzgröße, das Antriebsmodul (110) zu steuern, auf das Hindernis zu klettern und eine Oberfläche des Hindernisses zu reinigen, und/oder wobei die Steuereinrichtung (136) konfiguriert ist:
dann, wenn die Größe des Hindernisbereichs kleiner ist als die Referenzgröße, das Antriebsmodul (110) zu steuern, einen zweiten Reinigungsbereich, der dem ersten Reinigungsbereich folgt, zu reinigen.

10. Reinigungsroboter (10) nach Anspruch 3, wobei der Bereichsextraktor (132) konfiguriert ist:
dann, wenn eine Höhe des ersten Hindernisbereichs größer ist als die Referenzhöhe, ein zweites Bereichssignal, das den ersten Hindernisbereich enthält, an die Steuereinrichtung (136) auszugeben.

11. Reinigungsroboter (10) nach Anspruch 10, wobei die Steuereinrichtung (136) konfiguriert ist:
dann, wenn sie das zweite Bereichssignal empfängt, eine Bewegung als eine bedingungslose Ausweichbewegung, um dem ersten Hindernisbereich auszuweichen, zu bestimmen, und
das Antriebsmodul (110) basierend auf der bedingungslosen Ausweichbewegung zu steuern, dem ersten Hindernisbereich auszuweichen, und anschließend das Reinigen in dem ersten Bereich fortzusetzen.

12. Reinigungsroboter (10) nach einem der vorhergehenden Ansprüche, der ferner Folgendes umfasst:
ein Sensormodul (210), wobei das Steuermodul (240) ferner konfiguriert ist:
eine aktuelle Position auf einer Reinigungskarte basierend auf einem spezifischen kombinierten Orientierungspunkt auf eine spezifische Position zu korrigieren, wenn ein kombinierter Orientierungspunkt, der basierend auf Daten über Punktgruppen für jede erste Entfernung und jede zweite Entfernung, die von dem Sensormodul (210) eingegeben worden sind, erzeugt worden ist, für eine vorgegebene Zeitdauer mit dem spezifischen kombinierten Orientierungspunkt unter den kombinierten Orientierungspunkten für jede gespeicherte Position übereinstimmt.

13. Reinigungsroboter (10) nach Anspruch 12, wobei das Sensormodul (210) Folgendes umfasst:
einen ersten Sensor (212), der konfiguriert ist, Daten über Punktgruppen für jede erste Entfernung auszugeben; und
einen zweiten Sensor (214), der einen anderen Erfassungswinkel als der erste Sensor (212) aufweist und konfiguriert ist, Daten über Punktgruppen für jede zweite Entfernung auszugeben, und/oder
wobei das Steuerungsmodul (220) Folgendes umfasst:
einen Orientierungspunkt-Generator (242), der konfiguriert ist, den kombinierten Orientierungspunkt basierend auf einer ersten und einer zweiten Cluster-Gruppe, die durch Anwenden eines Clustering-Algorithmus auf die Daten über Punktgruppen für jede erste Entfernung und jede zweite Entfernung erzeugt werden, zu erzeugen;
eine Orientierungspunkt-Bestimmungsvorrichtung (244), die konfiguriert ist, zu bestimmen, ob der spezifische kombinierte Orientierungspunkt, der mit dem kombinierten Orientierungspunkt übereinstimmt, unter den kombinierten Orientierungspunkten für jede Position registriert ist; und
einen Positionskorrektor (246), der konfiguriert ist, die aktuelle Position auf den spezifischen Orientierungspunkt zu korrigieren, wenn die Orientierungspunkt-Bestimmungsvorrichtung (244) bestimmt, dass der spezifische kombinierte Orientierungspunkt registriert ist.

14. Reinigungsroboter (10) nach Anspruch 13, wobei der Orientierungspunkt-Generator (242) eine Abweichung in ersten Gradienten von benachbarten Punkten von einem ersten Startpunkt zu einem ersten Endpunkt in der ersten Cluster-Gruppe mit einem vorgegebenen kritischen Wert vergleicht, um einen ersten Orientierungspunkt zu erzeugen, eine Abweichung in zweiten Gradienten von benachbarten Punkten von einem zweiten Startpunkt zu einem zweiten Endpunkt in der zweiten Cluster-Gruppe mit dem kritischen Wert vergleicht, um einen zweiten Orientierungspunkt zu erzeugen, und den ersten Orientierungspunkt und den zweiten Orientierungspunkt kombiniert, um den kombinierten Orientierungspunkt zu erzeugen; und/oder
wobei dann, wenn jede Abweichung in den ersten Gradienten und den zweiten Gradienten ständig kleiner ist als der kritische Wert, der Orientierungspunkt-Generator (242) den ersten und den zweiten Orientierungspunkt erzeugt, die als eine gerade Linie ausgedrückt werden, oder dann, wenn die Abweichung in den ersten Gradienten und den zweiten Gradienten größer ist als der kritische Wert, den ersten und den zweiten Orientierungspunkt erzeugt, die als eine Kurve ausgedrückt werden; und/oder
wobei dann, wenn der spezifische kombinierte Orientierungspunkt nicht registriert ist, der Positionskorrektor (246) den kombinierten Orientierungspunkt speichert und registriert und eine neue Reinigungskarte erzeugt, in der der kombinierte Orientierungspunkt mit einem vorherigen kombinierten Orientierungspunkt verbunden ist.

## Revendications

1. Robot nettoyeur (10), comportant :
un module d'entraînement (110) configuré pour déplacer un corps principal (11) du robot nettoyeur (10) dans une première zone de nettoyage ;
un module de caméra (120) configuré pour générer une première image et une seconde image d'un environnement côté avant, capturées lorsque le corps principal (11) se déplace ; et
un module de commande (130 ; 240) configuré pour, lorsqu'un type d'obstacle (n) dans l'environnement côté avant est reconnu sur la base de la première image et de la seconde image, commander au module d'entraînement (110) de réaliser un mouvement d'évitement ou un mouvement de montée sur la base du type d'un obstacle dans l'environnement côté avant et de déplacer le corps principal (11),
**caractérisé en ce que** le module de commande (130) comporte :
un extracteur de zone (132) configuré pour extraire une première zone d'obstacle de la première image ;
un reconnaisseur d'obstacle (134) configuré pour reconnaître le type de l'obstacle (n) en appliquant un modèle de réseau neuronal convolutif (CNN) basé sur un apprentissage profond, à une seconde zone d'obstacle dans la seconde image correspondant à la première zone d'obstacle ; et
une commande (136) configurée pour déterminer un mouvement comme étant le mouvement d'évitement ou le mouvement de montée sur la base du type de l'obstacle et pour commander le module d'entraînement (110).

2. Robot nettoyeur (10) selon la revendication 1, le module de caméra (120) comportant :
un capteur de distance (122) configuré pour capturer la première image ayant des informations de profondeur correspondant à l'environnement côté avant ; et
un capteur de couleur (124) est configuré pour capturer la seconde image ayant des informations de couleur correspondant à l'environnement côté avant.

3. Robot nettoyeur (10) selon la revendication 1, dans lequel l'extracteur de zone (132) est configuré pour extraire une surface plane et une première zone d'obstacle plus haute que la surface plane sur la base d'informations de profondeur de la première image, et lorsqu'une hauteur de la première zone d'obstacle est inférieure à une hauteur de référence prédéterminée, transmettre un premier signal de zone incluant la première zone d'obstacle au reconnaisseur d'obstacle (134).

4. Robot nettoyeur (10) selon la revendication 3, dans lequel le reconnaisseur d'obstacle (134) est configuré pour, à réception du premier signal de zone, extraire des points de caractéristiques de l'obstacle en appliquant le modèle CNN à la seconde zone d'obstacle, et lorsque les points de caractéristiques de l'obstacle correspondent à l'un quelconque des points de caractéristiques d'un obstacle précédent appris et stocké, reconnaître l'obstacle précédent comme étant le type de l'obstacle et transmettre un premier signal à la commande.

5. Robot nettoyeur (10) selon la revendication 4, dans lequel le reconnaisseur d'obstacle (134), lorsque les points de caractéristiques de l'obstacle ne correspondent à aucun des points de caractéristiques de l'obstacle précédent appris et stocké, ne reconnaît pas le type de l'obstacle et transmet un second signal à la commande.

6. Robot nettoyeur (10) selon la revendication 1, dans lequel la commande (136) est configurée pour :
lorsqu'un premier signal indiquant que le type de l'obstacle est reconnu, est entré à partir du reconnaisseur d'obstacle (134) et que l'obstacle appartient à un objet à éviter, déterminer un mouvement comme étant le mouvement d'évitement, ou
lorsque le premier signal indiquant que le type de l'obstacle est reconnu, est entré à partir du reconnaisseur d'obstacle (134) et que l'obstacle appartient à un objet à ne pas éviter, déterminer un mouvement comme étant le mouvement de montée, et
commander au module d'entraînement (110) de poursuivre le nettoyage dans la première zone de nettoyage.

7. Robot nettoyeur (10) selon la revendication 1, dans lequel la commande (136) est configurée pour :
lorsqu'un second signal indiquant que le type de l'obstacle n'est pas reconnu, est entré à partir du reconnaisseur d'obstacle (134), déterminer un mouvement comme étant un mouvement d'enregistrement et d'évitement pour enregistrer une zone d'obstacle correspondant à au moins une zone parmi les première et seconde zones d'obstacle sur une carte de nettoyage incluant la première zone de nettoyage, et éviter ensuite la zone d'obstacle,
commander le module d'entraînement (110) sur la base du mouvement d'enregistrement et d'évitement, et
poursuivre le nettoyage dans la première zone de nettoyage.

8. Robot nettoyeur (10) selon la revendication 7, dans lequel la commande (136) est configurée pour :
à la fin du nettoyage dans la première zone de nettoyage après avoir commandé le module d'entraînement pendant le mouvement d'enregistrement et d'évitement, déterminer si une taille de la zone d'obstacle enregistrée sur la carte de nettoyage est supérieure à une taille de référence prédéterminée.

9. Robot nettoyeur (10) selon la revendication 8, dans lequel la commande (136) est configurée pour :
lorsque la taille de la zone d'obstacle est supérieure à la taille de référence, commander au module d'entraînement (110) de monter sur l'obstacle et de nettoyer une surface de l'obstacle et/ou, dans lequel la commande (136) est configurée pour :
lorsque la taille de la zone d'obstacle est inférieure à la taille de référence, commander au module d'entraînement (110) de nettoyer une seconde zone de nettoyage suivant la première zone de nettoyage.

10. Robot nettoyeur (10) selon la revendication 3, dans lequel l'extracteur de zone (132) est configuré pour :
lorsqu'une hauteur de la première zone d'obstacle est supérieure à la hauteur de référence, transmettre un second signal de zone incluant la première zone d'obstacle à la commande (136).

11. Robot nettoyeur (10) selon la revendication 10, dans lequel la commande (136) est configurée pour :
à réception du second signal de zone, déterminer un mouvement comme étant un mouvement d'évitement inconditionnel pour éviter la première zone d'obstacle, et
commander au module d'entraînement (110) d'éviter la première zone d'obstacle sur la base du mouvement d'évitement inconditionnel, et poursuivre ensuite le nettoyage dans la première zone de nettoyage.

12. Robot nettoyeur (10) selon l'une quelconque des revendications précédentes, comportant en outre :
un module de capteur (210), et dans lequel le module de commande (240) est en outre configuré pour :
corriger une position actuelle sur une carte de nettoyage en une position spécifique sur la base d'un repère combiné spécifique lorsqu'un repère combiné généré sur la base de données concernant des groupes de points pour chaque première distance et chaque seconde distance entrées à partir du module de capteur (210) pendant une période prédéterminée correspond au repère combiné spécifique parmi des repères combinés pour chaque position stockée.

13. Robot nettoyeur (10) selon la revendication 12, dans lequel le module de capteur (210) comporte :
un premier capteur (212) configuré pour générer des données concernant des groupes de points pour chaque première distance ; et
un second capteur (214) ayant un angle de détection différent du premier capteur (212) et configuré pour générer des données concernant des groupes de points pour chaque seconde distance et/ou
dans lequel le module de commande (220) comporte :
un générateur de repère (242) configuré pour générer le repère combiné sur la base d'un premier groupe regroupé et d'un second groupe regroupé générés en appliquant un algorithme de regroupement aux données concernant les groupes de points pour chaque première distance et chaque seconde distance ;
un déterminateur de repère (244) configuré pour déterminer si le repère combiné spécifique correspondant au repère combiné est enregistré parmi les repères combinés pour chaque position ; et
un correcteur de position (246) configuré pour corriger la position actuelle en position spécifique lorsque le déterminateur de repère (244) détermine que le repère combiné spécifique est enregistré.

14. Robot nettoyeur (10) selon la revendication 13, dans lequel le générateur de repère (242) compare un écart de premiers gradients de points adjacents d'un premier point de départ à un premier point d'arrivée dans le premier groupe regroupé, avec une valeur critique prédéterminée pour générer un premier repère, compare un écart de seconds gradients de points adjacents d'un second point de départ à un second point d'arrivée dans le second groupe regroupé, avec la valeur critique pour générer un second repère, et combine le premier repère et le second repère pour générer le repère combiné ; et/ou
dans lequel, lorsque chaque écart de premiers gradients et de seconds gradients est constamment inférieur à la valeur critique, le générateur de repère (242) génère les premier et second repères exprimés sous forme de ligne droite, ou lorsque l'écart de premiers gradients et de seconds gradients est supérieur à la valeur critique, génère les premier et second repères exprimés sous forme de courbe ; et/ou
dans lequel, lorsque le repère combiné spécifique n'est pas enregistré, le correcteur de position (246) stocke et enregistre le repère combiné, et génère une nouvelle carte de nettoyage dans laquelle le repère combiné est rattaché à un repère combiné précédent.
